# EUROPÄISCHE PATENTSCHRIFT

(11) **EP 1 078 966 B1**
(45) Veröffentlichungstag und Bekanntmachung des Hinweises auf die Patenterteilung: **03.11.2004**
(21) Anmeldenummer: 00116765.9
(22) Anmeldetag: 03.08.2000
(51) Int. Cl.: C09J 7/02, C09J 7/04, C09J 121/00

(54) **Verfahren zur Herstellung von Verpackungsklebebändern mit Naturkautschuk-Schmelzhaftkleber**
Process of manufacture of a packaging adhesive tape with natural rubber based pressure sensitive adhesive
Procedure de préparation d'un ruban d'emballage avec un adhésif sensible à la pression de caoutchouc naturell

(30) Priorität: 18.08.1999 DE 19939076
(43) Veröffentlichungstag der Anmeldung: 28.02.2001
(73) Patentinhaber: tesa AG, 20253 Hamburg (DE)
(72) Erfinder: Wenninger, Dieter, Dr., 22765 Hamburg (DE); Karmann, Werner, Dr., 22147 Hamburg (DE); Bir, Gerhard, Dr., 22117 Hamburg (DE); Hansen, Sven, 20255 Hamburg (DE); Leydecker, Heiko, 24730 Neustadt/Holstein (DE); Kaprolat, Stefanie, 35216 Biedenkopf (DE); Hirsch, Ralf, 25451 Quickborn (DE); Massow, Klaus, 22147 Hamburg (DE)

(56) Entgegenhaltungen:
- EP-A- 0 854 178
- DE-A- 1 935 684
- US-A- 5 496 636
- US-A- 5 914 157

## Beschreibung

Gegenstand der Erfindung ist ein Verfahren zur Herstellung von Klebebändern mit Klebemassen auf Basis von lösemittelfrei hergestellten und beschichteten Naturkautschuk-Schmelzhaftklebern und mit Trägern auf Basis von Thermoplastfolien.

Klebebänder mit Folien auf Basis von Thermoplastfolien, wie beispielsweise gereckten Polyolefinen, PET oder PVC, und Klebemassen auf Basis von lösemittelhaltigen Naturkautschukklebemassen sind bekannt und werden von bekannten Herstellern angeboten.

Auf Grund der bekannten Nachteile bei der Herstellung von lösemittelhaltigen Klebebändern wie zum Beispiel aufwendiges Recycling von Lösungsmitteln, Emission von Lösungsmittel in die Umwelt, Gefährdung am Arbeitsplatz durch leicht entflammbare Lösungsmittel und die Beschränkung der Beschichtungsgeschwindigkeit durch Trocknung der Klebemasse, sind lösemittelfreie Technologien zur Herstellung von Klebebändern von fortschreitender Bedeutung.

Die lösemittelfreie Technologie zur Herstellung von Klebebändern, insbesondere Verpackungsklebebändern, ist bisher auf die Verwendung von schmelzenden, thermoplastischen Elastomeren beschränkt. Vorteil dieser thermoplastischen Elastomeren, vorwiegend Blockcopolymere mit Polystyrolblöcken, ist der relativ niedrige Erweichungspunkt und die damit verbundene Vereinfachung des Auftrags- beziehungsweise Streichprozesses, sowie die Vermeidung der oben beschriebenen Nachteile der lösemittel-basierenden Technologien.

Das ungünstige Alterungsverhalten und das Eigenschaftsprofil derartiger Verpackungsbänder bei erhöhten Temperaturen, die schlechte Wärmestandfestigkeit, führen zu einem frühzeitigen Öffnen der mit diesen Verpackungsbändern verpackten Kartons beziehungsweise zu einem allgemein teilweise ungünstigen Leistungsprofil für Verpackungsklebebänder.

Verschiedene Wege zur lösungsmittelfreien Herstellung und Verarbeitung von Kautschuk-Haftklebern sind bekannt.

Alle bekannten Verfahren zeichnen sich durch extrem starken Kautschukabbau aus. Dieser erfordert bei der Weiterverarbeitung der Massen zu Selbstklebebändern extreme Vernetzungsbedingungen und hat außerdem ein teilweise eingeschränktes Anwendungsprofil, insbesondere für den Einsatz resultierender Selbstklebebänder bei höheren Temperaturen, zur Folge.

In dem Patent CA 698 518 wird ein Prozeß beschrieben, wie eine Masseherstellung durch Zusatz hoher Weichmacheranteile und/oder gleichzeitig starker Mastikation des Kautschuks zu erreichen ist. Zwar lassen sich nach diesem Verfahren Haftkleber mit extrem hoher Anfaßklebkraft erzielen, durch den relativ hohen Weichmacheranteil oder auch den starken Abbau der Molekularstruktur des Elastomers auf ein Molekulargewichtsmittel von M_{w} ≤ 1 Million ist die anwendergerechte Scherfestigkeit auch mit anschließender höherer Vernetzung nur eingeschränkt zu erreichen.

Die Verwendung von Polymerblends, wo neben nicht-thermoplastischem Naturkautschuk auch Blockcopolymere im Verhältnis von ca. 1:1 eingesetzt werden, stellt im wesentlichen eine unbefriedigende Kompromißlösung dar, da sich weder hohe Scherfestigkeiten beim Einsatz der Selbstklebebänder bei höheren Temperaturen, noch deutliche Verbesserungen gegenüber den im Patent beschriebenen Eigenschaften ergeben.

Der zielgerichtet durchgeführte technische Prozeß des Kautschukabbaus unter der kombinierten Einwirkung von Scherspannung, Temperatur, Luftsauerstoff wird in der Fachliteratur als Mastikation (engl.: mastication) bezeichnet und zumeist im Beisein chemischer Hilfsmittel durchgeführt, welche aus der Fachliteratur als Mastiziermittel oder Peptizer, seltener auch als chemische Plastiziermittel" bekannt sind.

Der Mastikationsschritt ist in der Kautschuktechnologie nötig, um eine Erleichterung der Aufnahme der Zusatzstoffe zu erzielen.

Nach Römpp (Römpp Lexikon Chemie - Version 1.5, Stuttgart/New York: Georg Thieme Verlag 1998) stellt die Mastikation eine gummitechnologische Bezeichnung für den Abbau langkettiger Kautschuk-Moleküle zur Erhöhung der Plastizität beziehungsweise Reduzierung der (Mooney-)Viskosität von Kautschuken dar. Die Mastikation wird durchgeführt durch Behandlung insbesondere von Naturkautschuk in Knetem oder zwischen Walzen bei möglichst niedrigen Temperaturen in Gegenwart von Mastikationshilfsmitteln (Mastizierhilfsmittel). Die dabei einwirkenden hohen mechanischen Kräfte führen zu einem Zerreißen" der Kautschuk-Moleküle unter Bildung von Makroradikalen, deren Rekombination durch Reaktion mit Luftsauerstoff verhindert wird. Mastikationshilfsmittel wie aromatische oder heterocyclische Mercaptane beziehungsweise deren Zink-Salze oder Disulfide beschleunigen durch Begünstigung der Bildung von Primärradikalen den Mastikationsprozeß. Aktivatoren wie Metall- (Eisen-, Kupfer-, Cobalt-) Salze von Tetraazaporphyrinen oder Phthalocyaninen ermöglichen eine Erniedrigung der Mastikationstemperatur. Mastikationshilfsmittel werden bei der Mastikation von Naturkautschuk in Mengen von ca. 0,1 bis 0,5 Gew.-% in Form von Masterbatches eingesetzt, die eine gleichmäßige Verteilung dieser geringen Chemikalienmenge in der Kautschukmasse erleichtern.

Die Mastikation ist streng zu unterscheiden von dem sich bei allen üblichen lösungsmittelfreien Polymertechnologien wie Compoundieren, Fördern und Beschichten in der Schmelze ergebenden Abbau, der Degradation (engl.: degradation).
Die Degradation ist eine Kollektivbezeichnung für unterschiedliche Prozesse, die das Aussehen und die Eigenschaften von Kunststoffen verändern. Degradation kann zum Beispiel durch chemische, thermische, oxidative, mechanische oder biologische Einflüsse oder auch durch Strahleneinwirkung (wie (UV-)Licht) verursacht werden. Folge sind zum Beispiel Oxidation, Kettenspaltungen, Depolymerisation, Vernetzung beziehungsweise Abspaltung von Seitengruppen der Polymeren. Die Stabilität von Polymeren gegenüber einer Degradation kann durch Additive, zum Beispiel durch Zusatz von Stabilisatoren wie Antioxidantien oder Photostabilisatoren erhöht werden.

Nichtgesteuerte Degradation stellt oft ein unerwünschtes Phänomen dar. Diese kann durch das Schaffen einer Schutzgasatmosphäre gering gehalten werden.

Der Einsatz von nicht-thermoplastischen Elastomeren wird ferner beschrieben in JP 95 331 197, wobei ein Isocyanat-reaktiver Naturkautschuk (Polyisopren gepfropft mit Maleinsäureester) mit einem mittleren Molekulargewicht M_{w} < 1 Million mit aliphatischen, nichtreaktiven Kohlenwasserstoffharzen Verwendung findet, der mit blockierten Isocyanaten (zum Beispiel Desmodur CT) vernetzt wird, wobei die Mischung bei 150 °C fünf Minuten lang vorvernetzt wird und nach anschließendem Ausstreichen auf PET-Folie bei 180 °C mehrere Minuten (zum Beispiel 15 Minuten) lang ausgehärtet wird. Diese Verfahrensweise macht deutlich, wie aufwendig eine Nachvernetzung zu erreichen ist, wenn der Naturkautschuk einem zu starken Abbau während des Herstellprozesses unterworfen wird.

In der Patentanmeldung JP 95 278 509 wird ein Selbstklebeband offenbart, bei welchem der Naturkautschuk auf ein mittleres Molekulargewicht von M_{w} = 100.000 bis 500.000 mastiziert wird, um eine streichfähige homogene Mischung mit Kohlenwasserstoff-, Kolophonium-/derivat-, Terpen-Harzen zu erhalten, die zwischen 140 °C und 200 °C bei einer Streichviskosität von 10 bis 50 x 10³ cps gut verarbeitbar ist, die jedoch eine anschließende extrem hohe ESH-Dosis (400 kGy) erfordert, um die für den Gebrauch notwendige Scherfestigkeit zu gewährleisten.
Für Trägermaterialien auf Basis von Polyolefinen ist das System daher nicht geeignet, da bei den erforderlich hohen Strahlendosen eine signifikante Trägerschädigung erfolgt. Diese Trägerschädigungen sind im Bereich der Verpackungsklebebänder nicht vertretbar.
Der Begriff Verpackungsklebebänder" oder für Verpackung geeignete Klebebänder" schließt zum einen die Verpackungsklebebänder für den Verschluß von Kartonagen und zum anderen Strapping Tapes für festes Bündeln und Palettieren von Kartonagen und anderen Gütern ein.

Der Einsatz von ausschließlich nicht-thermoplastischen Kautschuken als Elastomerkomponente in der Haftkleberrezeptierung mit dem bestehenden Kostenvorteil, den zum Beispiel Naturkautschuke gegenüber den handelsüblichen Blockcopolymeren aufweisen, und den herausragenden Eigenschaften, insbesondere der Scherfestigkeit des Naturkautschuks und entsprechender Synthesekautschuke, wird auch in den Patenten WO 94 11 175, WO 95 25 774, WO 97 07 963 und entsprechend US 5,539,033, US 5,550,175 ausführlich dargestellt.

Hierbei werden die in der Haftklebertechnik gebräuchlichen Zusätze wie Tackifier-Harze, Weichmacher und Füllstoffe beschrieben.
Das jeweils offenbarte Herstellungsverfahren basiert auf einem Doppelschneckenextruder, der bei der gewählten Prozeßführung über Mastikation des Kautschuks und anschließender stufenweiser Zugabe der einzelnen Zusätze mit einer entsprechenden Temperaturführung die Compoundierung zu einer homogenen Haftkleberabmischung ermöglicht.
Ausführlich wird der dem eigentlichen Herstellprozeß vorgeschaltete Mastikationsschritt des Kautschuks beschrieben. Er ist notwendig und charakteristisch für das gewählte Verfahren, da er bei der dort gewählten Technologie unumgänglich für die nachfolgende Aufnahme der weiteren Komponenten und für die Extrudierbarkeit der fertig abgemischten Masse ist. Beschrieben wird auch die Einspeisung von Luftsauerstoff, wie sie von R. Brzoskowski, J.L. und B. Kalvani in Kunststoffe 80 (8), (1990), S. 922 ff., empfohlen wird, um die Kautschukmastikation zu beschleunigen.

Diese Verfahrensweise macht den nachfolgenden Schritt der Elektronenstrahlenvernetzung (ESH) unumgänglich, ebenso wie den Einsatz von reaktiven Substanzen als ESH-Promotoren zum Erzielen einer effektiven Vernetzungsausbeute.

Beide Verfahrensschritte sind in den genannten Patenten beschrieben, die gewählten ESH-Promotoren neigen aber auch zu unerwünschten chemischen Vemetzungsreaktionen unter erhöhten Temperaturen. Dies limitiert den Einsatz bestimmter klebrigmachender Harze.

Aufgrund der unvermeidbaren hohen Produktionstemperaturen verbietet sich bei Compoundierung im Doppelschneckenextruder der Einsatz thermisch aktivierbarer Substanzen, die zur Vernetzung der Klebmassen geeignet sind, wie zum Beispiel Vernetzer auf Basis von Diisocyanat oder anderer Vernetzer, weil es wegen der im Prozeß einsetzenden chemischen Vernetzungsreaktionen und Nebenreaktionen zu so erheblicher Viskositätserhöhung kommt, daß die resultierende Haftklebemasse ihre Streichfähigkeit einbüßt und daher mittels Düsenbeschichtung nicht beschichtbar ist.

Die in den letzten Jahren entwickelten lösemittelfreien Schmelzhaftkleber auf Basis von nicht-thermoplastischen Elastomeren, wie zum Beispiel Naturkautschuk oder anderer hochmolekularer Kautschuke, weisen daher ohne Vernetzungsschritt der Klebemasse eine für die meisten Anwendungen ungenügende Kohäsion auf und kommen somit nicht für den Einsatz im Rahmen eines Verpackungsklebebandes in Frage. Ursache für dieses Versagen von unvernetzten Klebemassen auf Basis Naturkautschuk ist die relativ starke Reduzierung des Molekulargewichts durch die Verarbeitung beziehungsweise durch den Herstellungsprozess der Klebemassen auf Basis von Naturkautschuk und die hierbei resultierende, verminderte beziehungsweise ungenügende Kohäsion der Klebemassen. Die Verwendung derartiger Klebemassen auf Basis von Naturkautschuk-Schmelzhaftklebem für Klebebänder, insbesondere Verpackungsklebebänder, zum Verschließen von Kartons aus recyceltem Papier oder Kartonagen, führt dazu, daß sich die Kartons frühzeitig öffnen. Bei ausreichender großer Deckelspannung des Kartons, verursacht durch den Fülldruck des verpackten Materials im Karton oder durch die dem Verschließen entgegenwirkende Spannung des Verpackungsmaterials, löst sich das Klebeband von der Kartonoberfläche und der Karton öffnet sich durch Abrutschen des Verpackungsklebebandes.

Nicht nur für Verpackungsklebebänder zum Kartonverschluß, sondern auch für andere Verpackungsklebebänder, wie Strapping-Tapes, ist daher eine ausreichende Kohäsion der Klebemasse auf Basis von Naturkautschuk notwendig.

Die Kohäsion und damit die Verpackungssicherheit von Klebebändern mit einer Klebemasse auf Basis von Naturkautschuk kann entweder durch Vernetzung der Kautschuk-Klebemasse und/oder durch eine Herstellungsvariante der Klebemasse, bei der der eingesetzte Naturkautschuk deutlich weniger stark abgebaut wird und somit ein höheres Molekulargewicht aufweist, verbessert werden. Hierdurch kann einem Abrutschen der Klebebänder auf der Kartonoberfläche, wie oben beschrieben, entgegengewirkt werden.

Vernetzungsmöglichkeiten für Klebemassen auf Basis von Naturkautschuk sind bekannt und werden zur Herstellung von Klebebändern eingesetzt. Hierbei kann die Vernetzung der Klebemasse auf Basis Naturkautschuk direkt oder über den Einsatz eines auf Lösungsmittel basierenden Primers, der einen Anteil des geeigneten Vernetzers enthält, erfolgen.
Durch Migration des vernetzenden Primers in die Klebemasse auf Basis von Naturkautschuk kann die Klebemasse nachhaltig vemetzt werden. Nachteilig an dieser bekannten Technologie ist zum einen die Verwendung von lösemittelhaltigen Systemen im Laufe des Beschichtungsprozesses, die begrenzenden Topfzeiten derartiger reaktiver Primer und der deutlich erhöhte Aufwand bezüglich Arbeitssicherheit.
Die Vernetzung der Klebemassen auf Basis von Naturkautschuk über die Verwendung von Primem verläuft, unterstützt durch den Anlöseeffekt von lösemittelhaltigen Klebemassen, relativ schnell.

Die induzierte chemische Vernetzung einer Klebemasse auf Basis von Naturkautschuk durch Isocyanate, wie beispielsweise Diisocyanate oder Polyisocyanate ist bekannt und wird in Kombination mit lösungsmittelhaltigen Klebemassen auf Basis von Naturkautschuk von verschiedenen Klebebandherstellem eingesetzt. Hierdurch werden Klebemassen mit verbesserter Kohäsion, erhöhter Wärmestandfestigkeit und optimierter Verpackungssicherheit erzielt.

Aufgrund der unvermeidbar hohen Prozeßtemperaturen bei der Anwendung bekannter Herstellungsverfahren für Klebemassen auf Basis von Naturkautschuk-Schmelzhaftklebem ist der Einsatz chemischer Vemetzer, wie zum Beispiel Isocyanatsystemen, bislang, aufgrund der einsetzenden Vernetzungsreaktionen nicht möglich.

Eine weitere Möglichkeit stellt die Strahlenvernetzung der Klebmasse dar. Im Prinzip sind hierzu alle Arten von ionisierender Strahlung geeignet, mit denen auf den Polymermolekülen Radikale oder hochangeregte Stellen erzeugt werden, die anschließend zu Vernetzungsstellen reagieren. Besonders geeignet sind beschleunigte Elektronen mit Energien von etwa 50 keV bis 300 keV und Ultraviolette Strahlen (UV) mit Wellenlängen von etwa 200 bis 400 nm, da sie mit hoher Intensität erzeugt werden können, und die Eindringtiefe den für Klebebänder üblichen Beschichtungsstärken angepaßt werden kann.

Die grundsätzlichen Möglichkeiten der beschleunigten Elektronen zur Vernetzung von Haftklebemassen sind in der US 2,956,904 dargestellt. Eine Problematik liegt in der Beeinträchtigung mancher Substrate. So wird bei OPP-Folien die Lichtbeständigkeit stark reduziert, und PVC-Folien verfärben sich insbesondere nach Lagerung bei erhöhten Temperaturen. Beides ist durch spezielle Stabilisierung zu verringern, was aber einen erheblichen zusätzlichen Kostenaufwand bedeutet.

Die UV-Strahlung führt zu keiner wesentlichen Beeinträchtigung der Trägerfolien. Zur Vernetzung der Kautschukklebmasse sind Zusätze mindestens eines Photoinitiators und eines Vernetzungspromotors erforderlich, wie es in der US 4,152,231 beschrieben ist. Allerdings ist hier die Absorption von Füllstoffen, Farbpigmenten und anderer Zusätze zu berücksichtigen, was zu einem abnehmenden Vernetzungsgrad in der Tiefe der Beschichtung führt. Solche Schwachschichten können dann ein Versagen der Verklebung insbesondere bei Einwirkung höherer Temperaturen zur Folge haben.

Monoaxial und biaxial gereckte Folien auf Basis von Polypropylen werden in großen Mengen für Verpackungsklebebänder eingesetzt. Während für die Anwendung eines Verpackungsklebebandes für den Kartonverschluß biaxial gereckte Folien auf Basis Polypropylen bevorzugt werden, finden im Bereich der Strapping-Tapes monoaxial gereckte Polypropylenfolien Verwendung. Diese zeichnen sich durch sehr hohe Reißfestigkeit und geringe Dehnung in Längsrichtung aus und sind sehr gut für das Bündeln beziehungsweise für den Zusammenhalt von Paletten geeignet. Bei Verwendung von Klebemassen, die eine ungenügende Kohäsion aufweisen oder eine unzureichende Verankerung der Klebemasse auf der Folie, führt das Abrutschen der Strapping-Tapes zu einem Verrutschen der Paletten und somit zu einer ungenügenden Sicherung der Paletten. Eine unzureichende Verankerung der Klebemasse auf der Folie führt bei Verwendung von Kartonverschlußbändem zu einem frühzeitigen Öffnen der verpackten Kartons.

Ein lösemittelfrei und somit umweltschonend hergestellter Naturkautschukschmelzhaftkleber in Kombination mit einer Trägerfolie aus umweltschonendem Polypropylen legt aus konzeptionellen Gründen den Wunsch nach weiteren ökologisch verträglichen Produkt- und Produktionstechnologien nahe - sofern diese zusätzlich notwendig werden. Polypropylen ist als unpolarer, gesättigter Kohlenwasserstoff nicht ohne Weiteres geeignet, einen Primer oder eine Naturkautschukklebemasse genügend fest zu verankern. Gewisse Abhilfe kann durch eine aktivierende oxidative Trägervorbehandlung - beispielsweise durch Coronabehandlung oder Beflammung herbeigeführt werden. Beide Methoden sind umweltschonend durch Rohstoffeinsparung und verdienen als kostensenkende Alternativen zu naßchemischer Primerbeschichtung höchstes Interesse. Der alleinige Einsatz eines Primers löst das Verankerungsproblem auf Polypropylen im Regelfall nicht; der Primer selbst benötigt eine Trägeraktivierung für seine Fixierung auf diesem Substrat. Bekannt ist die gute Effizienz der Beflammung seit langem, insbesondere auch bei hohen Bahngeschwindigkeiten, doch erst seit moderne, gut steuerbare Beflammungsanlagen verfügbar sind, rückte die Beflammung in ihrer industriellen Bedeutung aus dem Schatten der Coronabehandlung. Wenn nicht all zu hohe Ansprüche an die Verankerungsfestigkeit gestellt sind, gestattet die Beflammung in Einzelfällen den Verzicht auf einen Primer. Die Realisierung einer anforderungsgerechten Verankerung allein durch Trägerbeflammung, im speziellen Falle eines Naturkautschukschmelzhaftklebers auf Polypropylenfolien für qualitativ anspruchsvolle Verpackungsklebebänder, steht in idealem Einklang mit den skizzierten Aspekten zum Umweltschutz.

Thermoplastfolien auf Basis von Polyethylentherephthalat (PET) oder Polyvinylchlorid (PVC) sind ebenfalls bekannt und werden zur Herstellung von Klebebändern von verschiedenen Herstellern eingesetzt. Hierbei zeichnen sich vor allem Folien auf Basis von PET durch eine hohe Reißdehnung und Wärmebeständigkeit von 130 °C bis 175 °C und Resistenz gegenüber verdünnten Laugen und Säuren aus. Weiterhin besitzen Folien auf Basis von Polyestern eine sehr hohe Abriebfestigkeit und Durchschlagfestigkeit, sind aber aufgrund des relativ hohen Preises gegenüber Folien auf Basis von Polyolefinen weniger verbreitet im Bereich der Verpackungsklebebänder.

Die Gewinnung des PVC kann hierbei durch Emulsions-, Suspensions- oder Massepolymerisation erfolgen. Auch Copolymere auf Basis PVC/Vinylacetat sind bekannt.

Folien auf Basis von PVC werden in Kombination mit lösemittelhaltigen Klebemassen auf Basis von Naturkautschuk von verschiedenen Herstellern als Verpackungsklebebänder angeboten. Hierbei werden aufgrund der besseren Wärmebeständigkeit Folien aus Hart-PVC verwendet, die bis max. 105 °C eine gute Wärmebeständigkeit aufweisen.

Bei der Herstellung von Klebebändern mit Klebemassen auf Basis von Naturkautschuk werden hierbei sowohl wasserbasierte als auch lösemittelhaltige Primer als Haftvermittler zwischen Klebemasse und Trägerfolie eingesetzt. Diese eingesetzten Haftvermittler haben zum Teil eine auf die aus Lösung aufgetragene Klebemasse auf Basis von Naturkautschuk vernetzende Wirkung.
Weiterhin zeichnen sich die Folien auf Basis Hart-PVC durch mittlere Durchschlagskraft und eine teilweise Resistenz gegenüber Benzin, Öl und Alkohole aus. Im allgemeinen ist die Verankerung von Primern auf PVC Folien ohne Coronabehandlung besser als bei anderen Thermoplastfolien, wie beispielsweise Folien auf Basis von Polyolefinen. Dies beruht auf der hohen Oberflächenenergie auch ohne Vorbehandlung [ca. 39 dyn/cm] und auf der rauhen Oberflächenstruktur von PVC Folien. Für eine ausreichende Verankerung von Klebemassen auf Basis von Naturkautschuk ist eine mit Primer beschichtete PVC-Folie zu empfehlen.

Aufgabe der vorliegenden Erfindung ist es, ein Verfahren zur Herstellung von Klebebändern mit Folien auf Basis von gereckten Thermoplastfolien und lösemittelfrei hergestellten Klebemassen auf Basis von Naturkautschuk zu schaffen. Weiterhin sollen die nach den erfindungsgemäßen Verfahren hergestellten Klebebänder leicht abrollen und einen guten Verbund zwischen Klebemasse und Trägerfolie aufweisen. Darüber hinaus sollen die nach den erfindungsgemäßen Verfahren hergestellten Klebebänder entweder als Verpackungsklebebänder oder als Strapping Tapes für handelsübliche Kartonagen geeignet sein.

Gelöst wird diese Aufgabe durch ein Verfahren, wie es im Hauptanspruch dargelegt ist. Gegenstand der Unteransprüche sind vorteilhafte Fortbildungen des Erfindungsgegenstands. Des weiteren betrifft die Erfindung Verwendungsvorschläge des erfindungsgemäß hergestellten Klebebands.

Demgemäß betrifft die Erfindung ein Verfahren zur Herstellung eines Klebebands mit einem Träger aus einer gereckten Thermoplastfolie und einer Beschichtung aus einer kontinuierlich lösungsmittelfrei und mastikationsfrei in einem kontinuierlich arbeitenden Aggregat mit einem Füll- und einem Compoundierteil hergestellten Haftklebemasse auf Basis von nicht-thermoplastischen Elastomeren wie Naturkautschuk und Klebeharzen, wobei die Haftklebemasse ein thermisch labiles Vemetzungssytem enthält, bestehend aus folgenden Schritten:
- Aufgabe der Festkomponenten der Selbstklebemasse wie Elastomere und Harze in den Füllteil des Aggregats, gegebenenfalls Aufgabe von Füllstoffen, Farbstoffen und/oder Vernetzern,
- Übergabe der Festkomponenten der Selbstklebemasse aus dem Füllteil in den Compoundierteil,
- Zugabe der Flüssigkomponenten der Selbstklebemasse wie Weichmacher, Vernetzer und/oder weiterer klebrig machender Harze in den Compoundierteil,
- Herstellung einer homogenen Selbstklebemasse im Compoundierteil und
- Austragen der Selbstklebemasse.

Folien auf Polyesterbasis, zum Beispiel Polyethylenterephthalat sind ebenfalls bekannt und können ebenso zur Herstellung der Klebebänder eingesetzt werden. Die Dicken der Folien auf Basis von PET liegen zwischen 20 und 100 µm, insbesondere zwischen 30 und 50 µm.

Folien auf Basis von gereckten Polyolefinen sind bekannt und gehören zum Stand der Technik. Monoaxial und biaxial gereckte Folien auf Basis von Polyolefinen werden in großen Mengen für Verpackungsklebebänder, Strapping Tapes und andere Klebebänder eingesetzt. Auch Folien auf Basis von gerecktem Polyethylen oder gereckten Copolymeren, enthaltend Ethylen- und/oder Polypropyleneinheiten sind bekannt. All diese Folien lassen sich als Trägerfolie erfindungsgemäß einsetzen.

Monoaxial gerecktes Polypropylen zeichnet sich durch seine sehr hohe Reißfestigkeit und geringe Dehnung in Längsrichtung aus und wird beispielsweise zur Herstellung von Strapping Tapes verwendet. Bevorzugt zur Herstellung der erfindungsgemäß hergestellten Klebebänder zum Bündeln und Palettieren von Kartonagen und anderen Gütern sind monoaxial gereckte Folien auf Basis von Polypropylen. Die Dicken der monoaxial gereckten Folien auf Basis von Polypropylen liegen bevorzugt zwischen 25 und 200 µm, insbesondere zwischen 40 und 130 µm.
Folien aus monoaxial gerecktern Polypropylen sind zur Herstellung der Klebebänder besonders geeignet. Monoaxial gereckte Folien sind überwiegend einschichtig, grundsätzlich können aber auch mehrschichtige monoaxial gereckte Folien hergestellt werden. Bekannt sind überwiegend ein-, zwei- und dreischichtige Folien, wobei die Anzahl der Schichten auch größer gewählt werden kann.

Bevorzugt zur Herstellung der Klebebänder zum sicheren Kartonverschluß sind biaxial gereckte Folien auf Basis von Polypropylen mit einem Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5.
Die erzielten Elastizitätsmodule in Längsrichtung, gemessen bei 10 % Dehnung nach ASTM D882, liegen üblicherweise zwischen 1000 und 4000 N/mm², vorzugsweise zwischen 1500 und 3000 N/ mm².
Die Dicken der biaxial gereckten Folien auf Basis von Polypropylen liegen besonders zwischen 15 und 100 µm, vorzugsweise zwischen 20 und 50 µm.
Biaxial gereckte Folien auf Basis von Polypropylen können mittels Blasfolienextrusion oder mittels üblicher Flachfolienanlagen hergestellt werden. Biaxial gereckte Folien werden sowohl ein- als auch mehrschichtig hergestellt. Im Falle der mehrschichtigen Folien können auch hier die Dicke und Zusammensetzung der verschiedenen Schichten gleich sein aber auch verschiedene Dicken und Zusammensetzungen sind bekannt.

Besonders bevorzugt für die erfindungsgemäß hergestellten Klebebänder sind einschichtige, biaxial oder monoaxial gereckte Folien und mehrschichtige, biaxiale oder monoaxiale Folien auf Basis von Polypropylen, die einen ausreichend festen Verbund zwischen den Schichten aufweisen, da ein Delaminieren der Schichten während der Anwendung nachteilig ist.

Folien auf Basis von Hart-PVC sind ebenfalls bekannt und werden von verschiedenen Klebebandherstellern zur Herstellung von Verpackungsklebebändem verwendet. Weich-PVC ist aufgrund der unzureichenden Wärmebeständigkeit von max. 60 °C nicht zur Herstellung von Verpackungsklebebändem geeignet, kann aber gegebenenfalls ebenso Verwendung finden.
Für die erfindungsgemäß hergestellten Klebebänder für einen sicheren Kartonverschluß werden vorzugsweise Folien verwendet auf Basis von Hart-PVC. Die Dicken der Folien liegen bevorzugt zwischen 30 und 100 µm, insbesondere zwischen 35 und 50 µm. Die erfindungsgemäß hergestellten Klebebänder werden als Verpackungsbänder zum Kartonverschluß verwendet.

In einer bevorzugten Ausführungsform des Klebebands wird die Haftung der Klebmasse auf der Thermoplastfolie auf Basis von Polyolefinen durch Coronabehandlung oder ganz besonders durch Flammenvorbehandlung verbessert, denn gerade die Oberflächen der Folien auf Basis von gereckten Polyolefinen können durch diese allgemein bekannten Verfahren, wie die Corona- oder Flammenbehandlung, behandelt werden. Bevorzugt sind Oberflächenbehandlungen durch Flammenvorbehandlung. Eine Übersicht über die Verfahren zur Oberflächenbehandlung enthält beispielsweise der Artikel Surface pretreatment of plastics for adhesive bonding" /A. Kruse; G. Krüger, A. Baalmann and O. D. Hennemann; J. Adhesion Sci. Technol., Vol 9, No12, pp 1611-1621 (1995).

Die biaxial oder monoaxial gereckten Folien auf Basis von Polyolefinen für die erfindungsgemäß hergestellten Klebebänder werden vorzugsweise auf der der Klebemasse zugewandten Seite mittels Corona- und/oder Flammenvorbehandlung vorbehandelt, um eine ausreichende Verankerung der Klebemasse auf der Folie zu erzielen. Bevorzugt ist die Folienvorbehandlung mittels Flammenvorbehandlung bei Folien auf Basis von gereckten Polyolefinen.

Die Beflammungsanlage besteht im Kernstück aus einer kühlbaren Brennereinheit und einer ebenfalls kühlbaren Behandlungswalze, die zur Bahnführung dient. Während die Brennertemperatur bei der Beflammung zwischen 30 °C und 40 °C gehalten wird, sorgt die Kühlung der Behandlungswalze für Temperaturen zwischen 10 °C und 15 °C an der Walze. Zwischen Brenner und Behandlungswalze wird die Folienbahn unter definierten Bedingungen geführt und behandelt. Die Beflammung der genannten Polyolefinfolien erfolgt über ein Brenngas-Luft-Gemisch in optimierter Zusammensetzung. Dabei besteht der Brenngasanteil aus gasförmigen Kohlenwasserstoffen wie Propan, Butan oder liegt als Gemisch von Kohlenwasserstoffen vor, zum Beispiel in Form von handelsüblichem Erdgas. Abhängig von der genauen Zusammensetzung des Brenngas-Luft-Gemisches werden Flammtemperaturen zwischen 750 °C und 900 °C erzielt. Der Abstand der Brennereinheit zur Behandlungswalze kann zwischen 2 mm und 7,5 mm reguliert werden. Bahngeschwindigkeiten sind in den Grenzen 30 m/min bis zu mehreren hundert m/min einstellbar.
Eine obere Grenze resultiert aus der Leistungsfähigkeit der zur Verfügung stehenden Anlage, d.h. der gesamten Anlage inklusive Beschichtungsteil bei inline-Trägerbehandlung oder der Beflammungsanlage bei offline-Trägervorbehandlung.
Die untere Grenze bedingt sich durch die thermische Empfindlichkeit des Folienmaterials. Der Energieeintrag ist über den Gemischvolumenstrum bei gegebenen Einstellungen für Gemischzusammensetzung, Brennerabstand und Bahngeschwindigkeit variierbar in den Grenzen von 20 m³/h bis 50 m³/h. Zusätzlich kann die effektive Beflammungsbreite über eine justierbare Brennerbegrenzung an unterschiedliche Folienbreiten angepaßt werden. Unter optimierten Parametern beflammtes Trägermaterial wird spätestens einen Tag nach erfolgter Vorbehandlung mit Naturkautschukschmelzhaftkleber beschichtet. Mit Vergleichsmaterial, das in geeigneter Weise coronavorbehandelt wurde, wird analog verfahren. Bei geeigneter Anlagenkonstruktion ist eine In-line" Flammen- oder Coronavorbehandlung vor Beschichtung der Klebemasse auf Basis von Naturkautschuk-Schmelzhaftklebern möglich und führt zu einer weiteren Verbesserung der Masseverankerung.

An fertigen Klebebändern wird die Verankerungsfestigkeit der Klebmasse geprüft, insbesondere nach Erreichen eines gereiften Zustandes. Dabei interessiert die Frage nach anforderungsgerechter Verankerungsfestigkeit ebenso wie der Vergleich zwischen Beflammung und Coronavorbehandlung.
Hierbei wird festgestellt, daß Trägerbeflammung weitaus bessere Verankerung von Naturkauschukschmelzhaftklebern bewirkt als eine zum Vergleich geeignete Coronavorbehandlung. Die Verankerung auf dem vorbehandelten Träger erfährt weitere, deutliche Steigerung, wenn der Naturkautschukschmelzhaftkleber Isocyanatvernetzer enthält. Speziell in Kombination mit der Trägerbeflammung läßt sich auf diese Weise der Einsatz eines Primers teilweise umgehen, was wiederum den Verzicht auf einen Trockenkanal in dem so gänzlich lösemittelfreien Beschichtungsprozeß ermöglicht.

Die Klebmasse selbst besteht vorzugsweise aus einer Mischung enthaltend:

| | |
|---|---|
| a) 100 Gew. TI. | Naturkautschuk (granuliert) |
| b) 70-120 Gew. TI. | Klebeharze auf Basis von Kohlenwasserstoffen |
| c) 5-30 Gew. TI. | Füllstoffe, zum Beispiel Kreide und/oder anorganische oder organische Pigmente |
| d) 2-20 Gew. TI. | Weichmacher, zum Beispiel Mineralöl |
| e) 0,1-15 Gew. TI. | ein Vemetzersystem |
| f) 0,5-5 Gew. TI. | Alterungsschutzmittel. |

Gegebenenfalls kommen darüber hinaus zur Mischung hinzu

| | |
|---|---|
| g) 0-10 Gew. TI. | anorganische und organische Pigmente. |

Die Auftragsmenge der Klebmasse auf das Trägermaterial, besonders eine Thermoplastfolie aus gereckten Polyolefinen, PVC oder PET, beträgt bevorzugt 10 bis 50 g/m². In einer weiteren bevorzugten Ausführung wird der Schichtauftrag von 14 bis 25 g/m² eingestellt.

Die erfindungsgemäß hergestellten Klebebänder können weitere Schichten enthalten: Die Verwendung von geeigneten Primern, die zwischen Klebeschicht und Folie angeordnet werden, ist möglich, wenn dadurch die erfindungsgemäße gute Verankerung zwischen Klebemasse auf Basis von Naturkautschuk-Schmelzhaftkleber und der flammen- oder coronabehandelten Folie nicht vermindert wird. Die Verwendung einer geeigneten Lackierung, zum Beispiel Trennlackierung (Release), ist möglich.

Klebemassen auf Basis Naturkautschuk sind seit langem bekannt und werden für Verpackungsklebebänder in großem Umfang eingesetzt. Eine Übersicht über Klebemassen und deren Einsatz im Bereich der Pressure Sensitive Adhesives findet sich in "Natural Rubber Adhesives" (G. L. Butler in Handbook of Pressure Sensitive Adhesive Technology, Third Edition, edited by Donata Satas, Van Nostrand Reinhold New York, pp.261-287).

Das hohe Molekulargewicht und die ungesättigten Molekülketten des Naturkautschuks bedingen seine Vorteile in den Materialeigenschaften und gleichzeitig die Probleme bei seiner Verarbeitung. Für leistungsfähige Klebebänder kann Naturkautschuk bis heute nur im Rahmen der Lösemitteltechnologie verarbeitet werden. Diese Technologie hat Grenzen in der Wirtschaftlichkeit, ökologischen Akzeptanz und der Weiterentwicklung der Klebemassen für Verpackungsklebebänder. Bekannte lösungsmittelfreie Technologien, wie beispielsweise die Verwendung von thermoplastischen Blockcopolymeren mit Polystyrolblöcken, beruhen auf niedrigen Schmelzviskositäten, die zu einer schlechten Wärmestandfestigkeit führen. Diese niedrigen Schmelzviskositäten sind beim Naturkautschuk nicht vorhanden. Weiterhin führen im Falle des Naturkautschuks hohe Prozeßtemperaturen, aufgrund der ungesättigten Naturkautschukmoleküle, zu einer thermisch-oxydativen Schädigung. Die Kombination von Planetwalzenextruder als geeignete Compoundiereinheit und die Beschichtung der Klebemasse durch ein Walzenauftragswerk ermöglicht den Einsatz von lösemittelfrei hergestellten Klebemassen auf Basis von Naturkautschuk für Verpackungsklebebänder und verbindet die Effizienz der Schmelzhaftklebertechnologie mit den Vorteilen der Naturkautschuktechnologie.

Die Klebemassen auf Basis Naturkautschuk werden erfindungsgemäß lösemittelfrei hergestellt, beschichtet und enthalten insbesondere Crepe-, SSR- oder ADS-, TSR-Typen des Naturkautschuks als Naturkautschukkomponente. Besonders bevorzugt sind ADS- und TSR-Kautschuktypen als Naturkautschukkomponente.

Um verschiedene Komponenten in den Naturkautschukanteil der Klebemasse einarbeiten zu können, ist bisher der drastische Abbau des Molekulargewichts des Kautschuks zur Herstellung der Klebemasse zwingend erforderlich. Dieser Prozeß (Mastikation) erfolgt über spezielle Kneter und ist besonders scherintensiv. Das Ausmaß des Molekulargewichtabbaus läßt sich über den Eintrag an Scherenergie, Temperatur und gezielter Einwirkung von Sauerstoff in gewissen Grenzen steuern. Der Einsatz eines Planetwalzenextruders zur Herstellung der Klebemassen auf Basis Naturkautschuk ermöglicht die Fertigung homogener Klebemassen durch höchste Scherraten bei exzellentem Wärmeaustausch und kürzester Verweilzeit der Masse. Hierdurch wird eine relativ geringe Reduzierung des Molekulargewichts des Naturkautschuks bewirkt, bei gleichzeitig niedrigen Prozeßtemperaturen von 90 bis 110 °C.

Klebeharze auf Basis von Kohlenwasserstoffen sind bekannt und werden sehr verbreitet für Klebemassen für Verpackungsklebebänder eingesetzt. Eine Beschreibung und Einsatzmöglichkeiten in Zusammenhang mit Klebemassen auf Basis von Naturkautschuk ist beispielsweise beschrieben in "Natural Rubber Adhesives" (G. L. Butler in Handbook of Pressure Sensitive Adhesive Technology, Third Edition, edited by Donata Satas, Van Nostrand Reinhold New York, pp.263-266). Klebeharze auf Basis von Kohlenwasserstoffen sind kommerziell mit einer Reihe von verschiedenen Eigenschaften erhältlich wie zum Beispiel verschiedener chemischer Struktur, Farbstufen und Erweichungspunkten. Für die erfindungsgemäß hergestellten lösemittelfreien Klebemassen auf Basis von Naturkautschuk werden Klebeharze auf Basis von Kohlenwasserstoffen verwendet. Die lösemittelfreie Klebemasse auf Basis von Naturkautschuk enthält 70 bis 120 Teile Klebharz und bevorzugt 80 bis 110 Teile Klebharz, bezogen auf 100 Teile Naturkautschuk.

Erfindungsgemäß ist auch die Verwendung von Klebeharzen auf Basis von Mischungen verschiedener Kohlenwasserstoffharze sowie von Mischungen von Kohlenwasserstoffharzen mit anderen bekannten Harzen, wenn dadurch das charakteristische Eigenschaftsbild der erfindungsgemäß hergestellten Klebebänder nicht eigenschaftsschädigend verändert wird. Möglich sind beispielsweise Mischungen von Kohlenwasserstoffharzen mit eher geringen Mengen von Klebeharzen auf Basis von Kolophonium oder modifiziertem Kolophonium oder Phenolharzen, anderen Naturharzen, Harzestem oder Harzsäuren.

Die Verwendung von Weichmachern als Zusatz zu Klebemassen für Verpackungsklebebändem ist bekannt.
Für die erfindungsgemäß hergestellten Klebebänder werden 2 bis 20 Teile Weichmacher, bezogen auf 100 Teile Naturkautschuk, auf Basis von paraffinischen und naphthenen Ölen, Oligomeren wie Oligobutadienen, -isoprenen, flüssigen Nitrilkautschuken, flüssigen Terpenharzen, pflanzlichen und tierischen Ölen und Fetten und Phthalaten eingesetzt.
Besonders bevorzugt für die erfindungsgemäß hergestellten Klebebänder sind lösemittelfreie Klebemassen auf Basis von Naturkautschuk mit 4 bis 10 Teilen Weichmacher. Insbesondere bevorzugt ist die Verwendung von paraffinischen und naphthenischen Ölen.

Alterungsschutzmittel für Klebemassen auf Basis von Naturkautschuk sind bekannt. Drei verschiedene Arten von Alterungsschutzmittel finden als Antioxidantien für Klebemassen besonders Verwendung. Alterungsschutzmittel auf Basis von Aminen, Dithiocarbamaten und auf Basis von Phenolen. Alterungsschutzmittel auf Basis von Phenolen sind sehr wirksam bei Einfluß von UV-Strahlung und Sonnenlicht.

Für die erfindungsgemäß hergestellten Klebebänder werden Alterungschutzmittel auf Basis von Phenolen eingesetzt. Die Klebemasse enthält insbesondere 0,5 bis 5 Teile eines geeigneten Alterungsschutzmittels auf Basis von Phenolen, bezogen auf 100 Teile Naturkautschuk. Erfindungsgemäß ist auch die Verwendung anderer Typen von Alterungsschutzmitteln, wie beispielsweise Alterungsschutzmittel auf Basis von Aminen und Dithiocarbamaten.

Anorganische und organische Pigmente für Klebmassen auf Basis von Naturkautschuk sind bekannt. Für die Anfärbung von Klebemassen auf Basis von Naturkautschuk wird insbesondere Titandioxid beziehungsweise Titandioxid in Kombination mit anders gefärbten Farbpigmenten eingesetzt.
Für die erfindungsgemäß hergestellten Klebebänder werden geeignete anorganische und/oder organische Farbpigmente eingesetzt. Die Klebemasse enthält 0 bis 10 Teile eines organischen beziehungsweise anorganischen Farbpigments, bezogen auf 100 Teile Naturkautschuk. Besonders bevorzugt ist die Verwendung von 0 bis 7 Teilen eines geeigneten anorganischen oder organischen Farbpigments, bezogen auf 100 Teile Naturkautschuk. Weiterhin erfindungsgemäß ist die Verwendung von Pigmenten auf Basis von Mischungen verschiedener anorganischer und organischer Pigmente.

Geeignete Füllstoffe für Klebmasse auf Basis von Naturkautschuk sind bekannt. Hierbei finden besonders Calciumcarbonat (Kreide), Titandioxid, Zinkoxid, Ton oder Pigmente Verwendung. Für die erfindungsgemäß hergestellten Klebebänder werden Füllstoffe auf Basis von Kreide, Titandioxid, Ton oder Pigmenten verwendet. Die Klebemasse enthält 10 bis 30 Teile Füllstoffe, insbesondere 10 bis 20 Teile Füllstoffe, bezogen auf 100 Teile Naturkautschuk. Besonders bevorzugt isf die Verwendung von Calciumcarbonat (Kreide) als Füllstoff. Weiterhin erfindungsgemäß ist die Verwendung von Füllstoffen auf Basis von Mischungen verschiedener Füllstoffe.

Die Vernetzung von Klebemassen auf Basis von Naturkautschuk ist bekannt und beispielsweise beschrieben in Natural Rubber Adhesives" G. L. Butler in Handbook of Pressure Sensitive Adhesive Technology, Third Edition, edited by Donata Satas, Van Nostrand Reinhold New York, pp.269-276. Die Vernetzung der Klebemasse auf Basis Naturkautschuk erfolgt entweder durch den Einsatz chemischer Vernetzer oder durch den Einsatz physikalischer Vernetzungsmethoden wie die Elektronenstrahlvernetzung oder die Vernetzung durch UV-Strahlung.

Zum Zwecke der chemisch-thermisch induzierten Vernetzung sind allgemein vorbekannte Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Besonders bevorzugt sind Vernetzer auf Basis von Isocyanaten, wie beispielsweise Diisocyantsysteme oder Polyisocyanate. Die Verwendung dieser Vernetzungssysteme ist grundsätzlich bekannt und beispielsweise beschrieben in der GB 1,234,860.

Die Klebemassen der erfindungsgemäß hergestellten Klebebänder enthalten 0,1 bis 15 Teile eines geeigneten Vernetzers, bezogen auf 100 Teile Naturkautschuk.
In einer bevorzugten Ausführung enthält die Klebemasse 0,1 bis 5 Teile eines Isocyanats, wie Diisocyanate oder Polyisocyanate, in einer besonders bevorzugten Ausführung 0,5 bis 2,0 Teile Isocyanate, bezogen auf 100 Teile Naturkautschuk. Die Menge an geeignetem Vernetzer kann an die Menge an Klebeharz angepaßt werden.

Die Strahlenvernetzung hat den Vorteil, sehr schnell einen hohen Vernetzungsgrad zu erreichen, der dann über lange Zeit stabil bleibt. Daher ist auch bei hohen Beschichtungsgeschwindigkeiten von einigen 100 m/min eine in-line Vernetzung möglich, und im Unterschied zu der chemischen Vernetzung kann die Qualität der Klebeigenschaften unmittelbar nach Abschlußder Produktion kontrolliert werden.
Durch Steuerung der Strahlungsintensität kann der gewünschte Vernetzungsgrad in weiten Bereichen unabhängig von der Bahngeschwindigkeit eingestellt gestellt werden.

Kautschukklebemassen können durch beschleunigte Elektronen ohne spezifische Zusätze vernetzt werden. Zur Steigerung der Vernetzungsausbeute können Vemetzungspromotoren wie mehrfunktionelle (Meth)acrylate, Thiole oder Bismalimide zugegeben werden.
Die zur Verfügung stehenden Anlagen und die wichtigsten Verfahrensparameter sind an anderer Stelle veröffentlicht worden (W. Karmann, J. of Industrial Irradiation Technology 1(4) (1983) S. 305-323).

Wegen der Schädigung vieler für Verpackungsbänder wichtiger Träger wie OPP- und PVC-Folien durch ESH ist die Vernetzung der Klebmasse durch UV-Strahlung besonders vorteilhaft. Hierfür müssen der Kautschuk-Klebemasse Photoinitiatoren und Vemetzungspromotoren zugesetzt werden. Als Photoinitiatoren können beispielsweise aromatische Ketone, Benzoin und Derivate, Benzil und davon abgeleitete Dialkylketale, Thioxanthane, Anthrachinone, Anthracene und Phosphinoxide eingesetzt werden. Als Vernetzungspromotoren sind Acryl- und Methacrylester mehrfunktioneller Alkohole wie Hexandiol, Trimethylolpropan sowie deren ethoxylierte und dimerisierte Derivate, Pentaerythrit und das Dimere, Polyethylenglycol und Polypropylenglycol geeignet. Für Schmelzhaftkleber werden wegen ihres niedrigeren Dampfdrucks i.a. Verbindungen mit höheren Molekulargewichten bevorzugt. Acrylester ergeben gewöhnlich höhere Reaktionsgeschwindigkeiten.

Bei der UV-Vernetzung ist die Absorption der Strahlung durch den Photoinitiator sowie durch anorganische und organische Pigmente in der Klebmasse zu beachten, die zu einer starken Abnahme des Vernetzungsgrads mit dem Eindringen in der Klebmasseschicht führt. Eine zu starke Vernetzung an der Oberfläche der Klebmasse hat ungünstige Klebeigenschaften zur Folge.
Das kann vermieden oder zumindest verringert werden wenn die Bestrahlung der Klebmasse durch die Trägerfolie hindurch oder von beiden Seiten aus erfolgt. Außerdem ist der Effekt dadurch zu verringern, daß der kurzwellige Anteil der Strahlung mit einer Wellenlänge unter etwa 300 nm durch verschiedene Maßnahmen verringert wird. Hierfür sind geeignete Strahlröhren auf dem Markt erhältlich. Der Anteil kann auch durch geeignete Filterung beseitigt werden.
Die Strahlungsintensität kann durch Zuschaltung von Strahlröhren und in gewissen Grenzen auch durch Steuerung der Strahlerleistung gesteuert werden, wie beschrieben von A. Beying, RadTech Europe '97.
Weiterhin wird vorteilhafterweise die Einwirkung des Luftsauerstoffs auf die Oberfläche der zu vernetzenden Klebmasse ausgeschaltet. Das kann durch Spülung mit inerten Gasen wie Stickstoff, Kohlendioxid und/oder Edelgasen wie Argon oder durch Abdeckung mit einem Releaseliner (Trennpapier oder -folien) erreicht werden, der gegebenfalls lichtdurchlässig sein kann.
Die Klebemassen der erfindungsgemäßen erfindungsgemäß hergestellten Klebebänder enthalten demgemäß in einer weiteren Ausführungsform sowohl 0,1 bis 5 Teile, vorzugsweise 0,5 bis 3, mindestens eines Photoinitiators als auch 0,5 bis 10 Teile, vorzugsweise 1 bis 5, eines mehrfunktionellen (Meth)acrylesters. Die Menge an geeignetem Vernetzer kann an die Menge des eingesetzten Harzes angepaßt werden.

Für die Elektronenstrahlvernetzung von Klebmassen mit Beschichtungen von 10 bis 50 g/m² werden bevorzugt mit Blei abgeschirmte einstufige Elektronenbeschleuniger mit Spannungen von etwa 50 bis 300 kV eingesetzt, die sich wegen ihrer relativ geringen Abmessungen leicht in die Beschichtungsanlagen integrieren lassen. Die auf dem Markt erhältlichen Typen werden von G.G. Skelhorne beschrieben ("Electron Beam Processing" in Vol 1 "Chemistry & Technology of UV & EB Formulations for Coatings, Inks & Paints" publ. Sita Technology, London 1991).
UV-Strahlungsanlagen bestehen aus einer oder mehreren Gasentladungsröhren, die zumeist mit elliptischen oder parabolischen Reflektoren und einer wirksamen Kühleinrichtung versehen sind. Ein Überblick über die unterschiedlichen Röhren und die übrigen Bauteile wird von R.E. Knight gegeben ("UV Curing Equipment and Applications" in Vol 1 "Chemistry & Technology of UV & EB Formulations for Coatings, Inks & Paints" publ. Sita Technology, London 1991).

Dann umfaßt die Erfindung ein Verfahren zur kontinuierlichen lösungsmittelfreien und mastikationsfreien Herstellung von Haftklebemassen auf Basis von nicht-thermoplastischen Elastomeren in einem kontinuierlich arbeitenden Aggregat mit einem Füll- und einem Compoundierteil, bestehend aus den folgenden Schritten
a) Aufgabe der Festkomponenten der Selbstklebemasse wie Elastomere und Harze in den Füllteil des Aggregats, gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vemetzer und/oder weiterer klebrig machender Harze gegebenenfalls in geschmolzenem Zustand in den Compoundierteil,
d) Herstellung einer homogenen Selbstklebemasse im Compoundierteil,
e) Austragen der Selbstklebemasse und
f) Beschichtung der Selbstklebemasse auf ein bahnförmiges Material, wobei die Beschichtung des bahnförmigen Materials mit einem Mehrwalzenauftragswerk, besonders mit einem 2- bis 5-Walzenauftragswerk, ganz besonders mit einem 4-Walzenauftragswerk durchgeführt wird, so daß die Selbstklebemasse bei Durchgang durch ein oder mehrere Walzenspalte auf die gewünschte Dicke ausgeformt wird, und wobei
   die Walzen des Auftragswerkes einzeln auf Temperaturen von 20 °C bis 150 °C eingestellt werden können.

Als besonders vorteilhaft hat sich die Verwendung eines Planetwalzenextruders als kontinuierlich arbeitendes Aggregat herausgestellt, wobei dessen Compoundierteil vorzugsweise zumindest aus zwei, besonders bevorzugt aber aus drei gekoppelten Walzenzylindern besteht, wobei jeder Walzenzylinder einen oder mehrere separate Temperierkreise aufweisen kann.

Im Unterschied zu sonst üblichen Herstellungsverfahren erfolgt insbesondere im Planetwalzenextruder gemäß dem Verfahren vorliegender Erfindung keine eigenschaftsschädigende Mastikation der nicht-thermoplastischen Elastomeren, da diese hier nicht separat dem Einfluß hoher Scherenergie unterworfen werden, sondern stets zusammen mit einer oder mehreren flüssigen Komponenten verarbeitet werden. Diese Flüssigkomponenten können sowohl Weichmacher wie zum Beispiel Öle sein, aber auch Harze, die erst während des Compoundierprozesses bei Einwirken von Scherenergie und/oder äußerer Temperierung aufschmelzen. Durch die Anwesenheit dieser Flüssigkomponenten wird das Ausmaß an Friktionsenergie derartig limitiert, daß die Mastikation des Kautschuks, d.h. der Molekulargewichtsabbau der Elastomeren, sowie hohe resultierende Compoundierungstemperaturen vermieden werden können.

Zudem weisen Planetwalzenextruder außerordentlich große Flächen auf, an denen es zum Wärmeaustausch, Materialabtausch und Oberflächenerneuerung kommt, mit der die über Friktion eingebrachte Scherenergie schnell abgeführt werden kann und auf diese Weise unerwünscht hohe Produkttemperaturen vermieden werden.

Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen läßt, sowie der geringen Verweilzeit und des engen Verweilzeitspektrums hat sich ihr Einsatzgebiet in letzter Zeit u.a. auch auf Compoundierprozesse erweitert, die eine besonders temperaturkontrollierte Fahrweise erfordern.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil. Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines Walzenzylinders mit Innenschrägverzahnung die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.
Die Materialien werden zwischen Zentral- und Planetenspindeln beziehungsweise zwischen Planetenspindeln und Schrägverzahnung des Walzenteils umgewälzt, so daß unter Einfluß von Scherenergie und äußerer Temperierung die Dispergierung der Materialien zu einem homogenen Compound erfolgt.

In diesem Zusammenhang wird auf die Patentanmeldungen beziehungsweise Gebrauchsmuster DE 196 31 182, DE 94 21 955, DE 195 34 813, DE 195 18 255, DE 44 33 487 verwiesen, die eine Übersicht zum Stande der Technik auf dem Gebiete der Planetwalzenextruder darstellen.

Es ist vorteilhaft, einen Planetwalzenextruder zu verwenden, dessen Compoundierteil durch Zusammenschalten von mindestens zwei Walzenzylindern verlängert ist. Zum einen ist dadurch trotz Anwesenheit friktionsreduzierender Komponenten zur Vermeidung der Kautschukmastikation ein vollständiges Aufschließen der Elastomerkomponenten sowie die gewünschte Homogenisier- und Dispergierleistung bei wirtschaftlichen Durchsatzraten möglich; zum anderen ermöglicht das Zusammenschalten vorzugsweise separat temperierter Walzenzylinder eine ausgewogene Temperaturführung des Prozesses, die die Verwendung von thermisch aktivierbaren Vernetzersystemen erlaubt.

Während im vorderen Compoundierteil des Planetwalzenextruders die Walzenzylinder vorteilhafterweise mit Temperaturen oberhalb des Schmelzpunkts der verwendeten Harze beheizt werden, wird der hintere Compoundierteil vorteilhafterweise zum Absenken der Produkttemperatur gekühlt. Dadurch wird die Verweilzeit der Selbstklebemasse bei höheren Temperaturen möglichst kurz gehalten, so daß eine Aktivierung der in der Selbstklebemasse enthaltenen thermischen Vernetzersysteme vermieden wird.

Im ersten Verfahrensschritt wird eine Masse aus den Elastomeren und den für die Herstellung von selbstklebenden Massen benötigten bekannten Zuschlagstoffen wie Füllstoffe, Alterungsschutzmittel, Weichmacher und Klebeharze in einem Planetwalzenextruder lösungsmittelfrei hergestellt, wobei die Masse eine Endtemperatur von weniger als 150 °C, bevorzugt weniger als 130 °C, ganz besonders bevorzugt zwischen 70 °C und 110 °C aufweist.
Die Gesamtverweilzeit der Masse im Planetwalzenextruder sollte nicht einen Wert von drei Minuten überschreiten. Die resultierende Hotmelt-Klebmasse weist eine Viskosität zwischen 300 und 1500 Pa*s, insbesondere eine Viskosität zwischen 800 und 1200 Pa*s bei 130 °C und einem Schergefälle von 100 rad/s auf.

Im zweiten, vorteilhafterweise im Verbund mit dem Compoundierschritt im Planetwalzenextruder erfolgenden Verfahrensschritt wird die erfindungsgemäß hergestellte, druckempfindliche Hotmelt-Klebemasse mit einem Auftragswerk auf einen bahnförmigen Träger lösemittelfrei beschichtet.

Erfindungsgemäß wird weiterhin vorgeschlagen, die Beschichtung des bahnförmigen Materials lösemittelfrei mit einem Walzenbeschichtungsauftragswerken oder Mehrwalzen-Beschichtungskalandem durchzuführen, die aus vorzugsweise drei, besonders bevorzugt aus vier Beschichtungswalzen bestehen, wobei die Selbstklebemasse bei Durchgang durch einen oder mehrere Walzenspalte vor Übergabe auf das bahnförmige Material auf die gewünschte Dicke geformt wird. Dieses Beschichtungsverfahren wird besonders dann bevorzugt, wenn die Viskositäten der Selbstklebemasse Werte von 5000 Pa*s bei einem Schergefälle von 1 rad/s übersteigt, da dann eine Beschichtung mit Extrusionsdüsen nicht mehr die erforderte Genauigkeit im Masseauftrag liefert.
Je nach Art des zu beschichtenden bahnförmigen Trägermaterials kann die Beschichtung im Gleichlauf- oder Gegenlaufverfahren erfolgen.

Die Beschichtung ist auf Walzenbeschichtungsauftragswerken oder Mehrwalzen-Beschichtungskalandern bei Temperaturen unterhalb von 100 C möglich, so daß auch Selbstklebemassen beschichtet werden können, die thermisch aktivierbare Vernetzer enthalten. Die trägerführende Walze ist gekühlt auf 5 °C bis 25 °C, vorzugsweise auf 10 bis 15 °C. Die Beschichtung wärmeempfindlicher Träger, wie beispielsweise Hart-PVC ist somit möglich.

Die Walzen des Auftragswerkes können dabei einzeln auf Temperaturen von 20 °C bis 150 °C eingestellt werden.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt. Die Auflegewalze ist gekühlt auf eine Temperatur von 5 bis 25 °C, vorzugsweise auf 10 bis 15 °C.

So können, ohne hiermit den Erfindungsgedanken einschränken zu wollen, die Differenzgeschwindigkeiten bei einem geeigneten 4-Walzenauftragswerk betragen

| Walze | Differenzgeschwindigkeit zur relativen Bahngeschwindigkeit [%] |
|---|---|
| Dosierwalze | 0,1 bis 25 insbesondere 1 bis 2 |
| Rakelwalze | 10 bis 100 insbesondere 30 bis 40 |
| Übertragungswalze | 10 bis 100 insbesondere 75 bis 90 |

Zum Zwecke erhöhter Gasblasenfreiheit der beschichteten Klebmasse kann zwischen Planetwalzenextruder und Auftragswerk eine Vakuumentgasung, zum Beispiel eine Vakuumkammer, ein Entgasungsextruder oder ähnliches installiert sein.

Die erfindungsgemäß hergestellten Klebebänder sind für eine große Anzahl von Klebebandanwendungen geeignet. Ein wichtiges Anwendungsfeld sind Verpackungsanwendungen. Die Klebebänder sind geeignet als Kartonverschlußbänder, allgemeine Verpackungsklebebänder, Strapping Tapes, Klebebänder zum Verschließen von Kunststoffverpackungen und Kunststoffbeuteln. Die Klebebänder sind zur Palettensicherung geeignet. Weitere Anwendungen sind das Bündeln loser Güter und Transportgüter, wie beispielsweise Rohren, Holzleisten u.a.. Die erfindungsgemäß hergestellten Klebbänder können zur Transportsicherung von beispielsweise Kühlschränken und anderen elektrischen und elektronischen Geräten verwendet werden. Weitere Anwendungen sind Etikettenschutz, Oberflächenschutz, beispielsweise im Baubereich und Aufreißstreifen für Verpackungen. Ebenso sind Anwendungen im Bürobereich möglich.

Im folgenden soll die Erfindung anhand von Beispielen erläutert werden, ohne die Erfindung unnötig einschränken zu wollen.

### Beispiele

### Beispiel a: Folie

Es wird eine biaxial gereckte Folie auf Basis von Polypropylen der Fa. Radici verwendet.

| | |
|---|---|
| Foliendicke | 25 *µ*m |
| Kennzeichnung | Radil T 25 NT (NT = Non treated) |
| Firma/Hersteller | Fa. Radici |
| Reißdehnung längs | 130% |
| Reißdehnung quer | 50% |
| Elastizitätsmodul längs | 2500 N/mm² |
| Elastizitätsmodul quer | 4000 N/mm² |
| Thermische Schrumpfung bei 130 °C für 60 sec. | längs<5% |
| Thermische Schrumpfung bei 130 °C für 60 sec. | quer<2% |

Die Oberflächenenergie der unbehandelten BOPP Folie Radil T25 NT beträgt weniger als 30 mN/m.
Die Oberflächenenergie der Polypropylenoberfläche, die mit Klebemasse beschichtet wird, beträgt 52 mN/m nach Flammenvorbehandlung und 48 bis 50 mN/m nach Coronabehandlung.

Die gegenüberliegende-Oberfläche der Folie, die nicht mit der Klebemasse beschichtet wird, wird vor dem Beschichten mit Hilfe der üblichen Technologien mit einem Rückseitelack versehen.

### Beispiel b: Flammenvorbehandlung der Polypropylenfollen

### Materialien:

| | |
|---|---|
| Folie | Radil T 25 NT (BOPP-Folie,Fa. RADICI), Oberflächenenergie |
| vor | Beflammung weniger als 30 mN/m |
| Brenngas | Propan (technische Reinheit, Fa. LINDE) |
| Brenngas-Luftgemisch | ungefähres Mengenverhältnis = 1: 28 (v/v) |

### Technische Parameter:

| | |
|---|---|
| Beflammungsseite | Außenseite des Ballens |
| Bahngeschwindigkeit | 100 m/min |
| Abstand Brenner/Behandlungswalze: | 3 mm |
| Brennertemperatur: | 38°C |
| Temperatur der Behandlungswalze: | 15 °C |
| Temperatur der Flamme: | 840°C |
| Gemischvolumenstrom: | 20 m³/h |
| Effektive Brennerbreite: | 32 cm |

Die unter dieser Parameterkombination beflammte Folienseite besitzt eine Oberflächenenergie von 52 mN/m. Eine zu Vergleichszwecken geeignete Coronavorbehandlung erzielt üblicherweise Werte zwischen 48 bis 50 mN/m.

### Beispiel c: Komponenten der Klebemassen

| | |
|---|---|
| c1 | Naturkautschuk TSR 5L beziehbar über Fa. Weber&Schaer, Hamburg. |
| c2 | Kohlenwasserstoffklebharz Hercotac 205 der Fa. Hercules B.V., Rijswik, NL |
| c3 | Füllstoff Mahlkreide Mikrosöhl 40 beziehbar von Fa. Vereinigte Kreidewerke Dammann KG, Söhlde |
| c4 | Weichmacher paraffinisches Weichöl Shell Ondina G33 der Fa. Deutsche Shell AG, Hamburg |
| c5 | Alterungsschutzmittel Lowinox® 22M46 (2,2-Methylen-bis-[6-(1,1-dimethylethyl)-4-methyl-phenol)] der Fa. GREAT LAKES |
| c6 | Isocyanatvernetzer, 4,4-Diphenylmethan-Diisocyanat-Produkt Suprasec DNR der Fa. ICI Polyurethanes, Löhne |

### Zusätzlich für Rezeptur Versuch B:

| | |
|---|---|
| c7 | Promotor für die UV Vernetzung, Ebecryl 140, ist dimerisiertes Trimethylolpropantetraacrylat (C₂₄H₃₈O₉) der Firma UCB Chemicals, Radcure Products, Drogenbos in Belgien |
| c8 | Photoinitiator Irgacure 651, ist 2,2-Dirnethoxy-1,2-diphenylethan-1-on der Firma Ciba Additive GmbH, Lampertheim in Deutschland |

### Beispiel d: Klebmasserezepturen

Folgende Rezepturen wurden verwendet. Alle Rezepturen sind in phr angegeben, das heißt in Bezug auf 100 Teile Kautschuk.

### Rezeptur A:

Rezeptur zur chemische Vernetzung der Klebemasse auf Basis eines Naturkautschuk-Schmelzhaftklebers durch Diisocyanat:

| | |
|---|---|
| Naturkautschuk granuliert | 100 |
| Hercotac 205 | 98 |
| Kreide | 18 |
| Weißöl | 4 |
| Alterungsschutzmittel | 2 |
| Diisocyanat | 0,9 |

### Rezeptur B

Rezeptur der unvernetzten Klebemasse auf Basis eines Naturkautschuk-Schmelzhaftklebers:

| | |
|---|---|
| Naturkautschuk granuliert | 100 |
| Hercotac 205 | 98 |
| Kreide | 18 |
| Weißöl | 4 |
| Alterungsschutzmittel | 2 |

### Rezeptur C

Rezeptur zur Vernetzung durch UV-Strahlung einer Klebemasse auf Basis eines Naturkautschuk-Schmelzhaftklebers:

| | |
|---|---|
| Naturkautschuk granuliert | 100 |
| Hercotac 205 | 98 |
| Kreide | 18 |
| Alterungsschutzmittel | 2 |
| Ebecryl 140 | 3,5 |
| Irgacure 651 | 4,5 |

### Beispiel e: Herstellung der Klebemasse

Die Klebemassen auf Basis Naturkautschuk wurden ein- und mehrstufig, lösemittelfrei hergestellt.

### Beispiel e1:

In einem ersten Verfahrensschritt wurde ein Vorbatch hergestellt. Der Vorbatch wurde nach der als VB-A bezeichneten Rezeptur in einem Banbury-Kneter des Typs GK 1,4 N der Firma Werner & Pfleiderer, Stuttgart, hergestellt.

| Vorbatch-Rezeptur VB-A | |
|---|---|
| Naturkautschuk, granuliert | 100 |
| Hercotac 205 | 18 |
| Kreide | 18 |
| Weißöl | 4 |
| Alterungsschutzmittel | 2 |

Knetkammer und Rotoren waren auf 25 °C temperiert, die Schaufeldrehzahl betrug 50 min⁻¹. Das Gesamtgewicht des Vorbatches betrug 1,1 kg. Alle Bestandteile wurden trocken vorvermischt und gemeinsam mit dem Weißöl dosiert.

Eine Mischzeit von sechs Minuten war ausreichend für die Homogenisierung der Bestandteile des Vorbatches.

In einem Verfahrensschritt 2 wurde der Naturkautschuk-Schmelzhaftkleber fertig gemischt. In einer Knetmaschine der Bauart LUK1.0 K3 der Firma Werner & Pfleiderer, Stuttgart, wurden hierzu dem Vorbatch alle weiteren Zuschlagsstoffe zugesetzt, so daß ein Naturkautschuk-Schmelzhaftkleber entsprechend der Bruttorezeptur A resultierte. Der Vorbatch wurde ½ Minute geknetet, dann das gesamte Klebharz gemäß Rezeptur F-A zugesetzt. Das Isocyanat wurde nach 10 Minuten zugemischt.

| Rezeptur F-A | |
|---|---|
| Vorbatch VB-A | 142 |
| Hercotac 205 | 80 |
| Diisocyanat | 0,9 |

Die Rezeptur F-A entspricht in Summe der Bruttorezeptur A des Naturkautschuk-Schmelzhaftklebers.
Das Gesamtgewicht des Schmelzhaftklebers betrug 500 g. Die Kammertemperatur war während des gesamten Fertigmisch-Vorganges auf 80 °C eingestellt. Die Gesamtknetzeit betrug 10 Minuten.

### Beispiel e2

Beispiel *e1* wurde wiederholt.

Für die Vereinfachung des Entleerens wurde im zweiten Verfahrensschritt des Fertigmischens eine Knetmaschine der Bauart VI U 20 L der Firma Aachener Misch- und Knetmaschinen-Fabrik Peter Küpper, Aachen, mit Austragsschnecke benutzt. Der Vorbatch wurde ½ Minute geknetet, dann das gesamte Klebharz gemäß Rezeptur F-A zugesetzt. Das Isocyanat wurde nach 7 Minuten zugemischt.

Das Gesamtgewicht des Schmelzhaftklebers betrug 12 kg. Die Kammertemperatur wurde auf 80°C eingestellt. Die Gesamtknetzeit betrug 12 Minuten, die Entleerungszeit 7 Minuten.

Die Herstellung der unvernetzten Rezeptur B und der UV-vernetzbaren Rezeptur C erfolgte analog Beispiel e2 ohne Zugabe von Isocyanat-Vernetzer in Rezeptur B, beziehungsweise durch Zugabe des UV-Vernetzers und des Promotors bei Rezeptur C.

### Beispiel e3

Der Naturkautschuk-Schmelzhaftkleber wurde kontinuierlich mit Hilfe eines Doppelschneckenextruders L/D=36 der Firma FARREL hergestellt. Hierbei wurden die Festkomponenten Kautschuk und Kreide die erste Förderzone, das Harz in die 2 Förderzone und die Flüssigkomponenten zudosiert
Gravimetrische Dosierer, Dosierpumpen und die Schneckendrehzahl wurden so eingestellt, daß sich eine Produktrate von 10 kg/h bei homogener Mischung ergab. Die Temperierung der einzelnen Zonen erfolgte so, daß eine Produkttemperatur von 75 °C erreicht wurde.

### Beispiel e4

Die kontinuierliche Masseherstellung der Klebemassen auf Basis von Naturkautschuk-Schmelzhaftklebern erfolgte bevorzugt mittels Planetwalzenextruder.

Der Planetwalzenextruder wurde jeweils mit ein, zwei oder drei Walzenzylindern betrieben, wobei jeder Walzenzylinder mit 6 Planetenspindeln bestückt war und zwischen jedem Walzenzylinder ein Anlaufring mit einem freien Querschnitt von 44 mm verwendet wurde. Die Drehzahl der Zentralspindel wurde auf 100 Umdrehungen/min eingestellt. Es wurde die maximale Produktrate (Qₘₐₓ) für jede Planetwalzenextruder-Konfiguration ermittelt, bis zu der ein homogener Compound erhalten wurde.
Um das Naturkautschukgranulat dosierfähig zu halten, wurde es talkumiert. Zur Granulatherstellung wurde eine Schneidmühle der Fa. Pallmann verwendet.

Aus sämtlichen Rezepturkomponenten wurde in einem 50-kg-Pulvermischer ein Premix hergestellt, der über einen volumetrisch arbeitenden Dosierer in den Füllteil des Planetwalzenextruders dosiert wurde. Die Temperierkreise für die Zentralspindel und das Füllteil (TK1 und TK2) waren wassergekühlt, jedes Walzenteil wurde mit 100 °C beheizt. Die Tabelle zeigt in Abhängigkeit der Anzahl an Walzenzylindern die maximal erzielten Produktraten.

| Vergleichsbeispiel | Anzahl Walzenzylinder | Qₘₐₓ [kg/h] |
|---|---|---|
| 1 | 1 | 45 |
| 2 | 2 | 62 |
| 3 | 3 | 83 |

Die oben in Beispiel c aufgeführten Komponenten wurden separat über volumetrisch arbeitende Dosiersysteme dem Füllteil des Planetwalzenextruders kontinuierlich zugeführt. Die Produktaustrittstemperatur wurde zu 122 °C gemessen.

### Beispiel f: Beschichtung der Klebemasse

Die kontinuierlich und nicht kontinuierlich hergestellten Naturkautschuk-Schmelzhaftkleber mit Diisocyanat auf Basis Rezeptur A, Beispiel d und die unvernetzte Klebemasse auf Basis eines Naturkautschuk-Schmelzhaftklebers Rezeptur B, Beispiel d, und die UV-Vernetzer und Promotoren enthaltende Rezeptur C, Beispiel d, wurden unmittelbar nach dem Herstellprozeß unter Verwendung eines biegesteifen 2-Walzenauftragswerks beschichtet. Hierbei wurde ein Förderextruder zur Anförderung der Klebemassen verwendet.
Eine branchenübliche 25 µm starke BOPP-Folie, welche mit einer branchenüblichen Primerschicht auf Isocyanatbasis und einer branchenüblichen Releaseschicht auf Carbamatbasis versehen ist, wurde verwendet und die Klebemassen mit einer Schichtdicke von 18 µm aufgebracht.

Die Beschichtung der in Beispiel a beschriebenen Trägerfolie erfolgte direkt, und zwar in einer Schichtstärke von 18 µm.

Die Beschichtung erfolgte auf einer Technikumsbeschichtungsanlage mit einer Arbeitsbreite von 500 mm.
Die Beschichtung des Klebefilms auf die geprimerte Folienseite erfolgte direkt. Zwischen der ersten und der zweiten, bahnführenden Beschichtungswalze wurde gemäß der Auftragsdicke ein Beschichtungsspalt eingestellt. Die erste Walze war auf 100 °C temperiert, die bahnführende Walze auf 15 °C gekühlt. Die aus dem Förderextruder austretende Klebemasse besaß eine Temperatur von 120 °C. Die Beschichtung erfolgte mit 50 m/min.

Die Eigenschaften der Klebebänder, deren Klebemassen mittels Planetwalzenextruder hergestellt wurden, sind untersucht worden.
Die Bestimmung der Eigenschaften erfolgte nach einer dreitägigen Lagerung bei 23 °C

### Beispiel g: UV-Vernetzung der Klebemasse

Die Muster mit der Rezeptur C wurden mit einer transparenten silikonisierten Polypropylenfolie abgedeckt und anschließend mit einem Quecksilber-Mitteldruckstrahler mit einer Leistung von 105 W/cm bei einer Geschwindigkeit von 40 m/min bestrahlt. Die Bestrahlung der Klebmasse erfolgte einmal durch die Releasefolie und zum anderen durch die Rückseite des Trägers.

### Beispiel h: Ergebnisse

Die eingesetzten Prüfmethoden sind im folgenden kurz charakterisiert:

Die Klebkraft (Schälfestigkeit) der Massen wurde nach AFERA 4001 bestimmt.

Die Scherfestigkeit der untersuchten Klebmassen wurde nach PSTC 7 (Holding Power) bestimmt. Alle angegebenen Werte wurden bei Raumtemperatur und der angegebenen Belastung von 20 N mit einer Verklebungsfläche von 20x13 mm² bestimmt. Die Ergebnisse sind in Minuten Haltezeit angegeben. Als Haftgrund wurde Stahl verwendet.

Zur Charakterisierung des Vernetzungsgrads wurde der Gelanteil in Toluol bestimmt. Dazu wurden quadratische Stücke von 20 cm² ausgestanzt und in einen Beutel aus Polyethylen-Spinnvlies eingeschweißt (Tyvek der Firma DuPont mit einem Flächengewicht von ca. 55 g/m²). Die Muster wurden dann 3 Tage unter Schütteln mit Toluol extrahiert. Dabei wurde das Toluol täglich gewechselt. Anschließend wurde das Toluol gegen Hexan/Heptan ausgetauscht und bei 110 °C getrocknet Das Gel wurde durch Differenzwägung bestimmt, wobei Extraktionsverluste des Vlieses und des Trägers berücksichtigt wurden. Der Gelanteil wird auf den Kautschukanteil in der Rezeptur der Klebmasse bezogen.

Zur Bestimmung des Masseauftrags wird aus der beschichteten Folie ein kreisrundes Muster mit bekannten Flächeninhalt ausgeschnitten und gewogen. Danach wird die Klebemasse durch Ablösen mit Benzin entfernt und die nun klebemassefreie Folie erneut gewogen. Aus der Differenz wird der Masseauftrag in g/m² berechnet.

Zur Charakterisierung des Anfaßvermögens zu Karton wird das Klebeband mit einem handelsüblichen Handabroller auf den Karton aufgebracht und mittels einer 2 kg schweren Stahlrolle angedrückt (zweimaliges Überrollen). Nach einer Wartezeit von 3 min wird das Klebeband mit einer Geschwindigkeit von ca. 30m/min unter einem Winkel von ca. 130° zur Kartonoberfäche parallel abgezogen. Die Beurteilung des Anfaßvermögens zu Karton erfolgt qualitativ anhand der Menge an ausgerissenen Papierfasem im Vergleich zu einem handelsüblichen Verpackungsklebeband wie tesapack 4124 der Fa. Beiersdorf, dessen Anfaßvermögen mit sehr gut charakterisiert wird.

| Eigenschaft | Rezeptur A | Rezeptur B | Rezeptur C | |
|---|---|---|---|---|
| Vernetzung durch | Diisocyanat-Vernetzer | Nicht vernetzt | UV-Vernetzung durch die | |
| | | | Releasefolie | Rückseite |
| Klebemasseauftrag [g/m²] | 18 | 18 | 18 | 18 |
| Primerschicht (standard) | nein | nein | ja | ja |
| Physikalische Vorbehandlung der Folie | Beflammung | Beflammung | Corona vor Primer | Corona vor Primer |
| Masseverankerung | gut | mittel | gut | gut |
| Gelanteil | - | 0 % | 72% | 72% |
| Scherfestigkeit 20 N Stahl | >10000 min | 488 | 7200 min | >10000 min |
| Klebkraft auf Stahl | 3,1 N/cm | 3,0 N/cm | 1,8 N/cm | 1,8 N/cm |
| Anfaßvermögen zu Karton | gut | gut | gut | gut |

## Patentansprüche

1. Verfahren zur Herstellung eines Klebebands mit einem Träger aus einer gereckten Thermoplastfolie und einer Beschichtung aus einer kontinuierlich lösungsmittelfrei und mastikationsfrei in einem kontinuierlich arbeitenden Aggregat mit einem Füll- und einem Compoundierteil, hergestellten Haftklebernasse auf Basis von nicht-thermoplastischen Elastomeren wie Naturkautschuk und Klebeharzen, wobei die Haftklebemasse ein thermisch labiles Vernetzungssytem enthält, bestehend aus
a) Aufgabe der Festkomponenten der Selbstklebemasse wie Elastomere und Harze in den Füllteil des Aggregats, gegebenenfalls Aufgabe von Füllstoffen, Farbstoffen und/oder Vernetzern,
b) Übergabe der Festkomponenten der Selbstktebemasse aus dem Füllteil in den Compoundierteil,
c) Zugabe der Flüssigkomponenten der Selbstklebemasse wie Weichmacher, Vemetzer und/oder weiterer klebrig machender Harze in den Compoundierteil,
d) Herstellung einer homogenen Selbstklebemasse im Compoundierteil und
e) Austragen der Selbstklebemasse.

2. Verfahren nach Anspruch 1 **dadurch gekennzeichnet, dass** die Thermoplastfolie aus biaxial gerecktem HDPE, PVC oder PET, aus monoaxial gerecktem Polypropylen oder aus biaxial gerecktem Polypropylen besteht.

3. Verfahren nach den Ansprüchen 1 und 2, **dadurch gekennzeichnet, dass** die Klebmasse besteht aus einer Mischung enthaltend:
| | |
|---|---|
| a) 100 Gew. TI. | Naturkautschuk |
| b) 70-120 Gew. TI | Klebeharze auf Basis von Kohlenwasserstoffen |
| c) 5-30 Gew. TI | Füllstoffe |
| d) 2-20 Gew. TI. | Weichmacher |
| e) 0,1-15 Gew. TI | ein Vemetzersystem |
| f) 0,5-5 Gew. TI. | Alterungsschutzmittel. |

4. Verfahren nach den Ansprüchen 1 bis 3, **dadurch gekennzeichnet, dass** das Vemetzersystem basiert auf Isocyanaten, wie Diisocyanate oder Polyisocyanate, das insbesondere zu 0,1-5,0 Gew. Tl eingesetzt wird, insbesondere 0,1-2,0 Gew. Tl.

5. Verfahren nach den Ansprüchen 1 bis 4, **dadurch gekennzeichnet, dass** als Vernetzersystem eine Mischung aus mindestens einem Photoinitiator, eingesetzt insbesondere zu 0,1-5 Gew. Tl und mindestens einem mehrfunktionellen (Meth)acrylester, eingesetzt insbesondere zu 0,5-10 Gew. Tl, verwendet wird.

6. Verfahren nach zumindest einem der vorhergehenden Ansprüche, **dadurch gekennzeichnet, dass** die Haftklebemasse durch beschleunigte Elektronen oder UV-Strahlung vemetzt wird.

7. Verfahren nach zumindest einem der vorhergehenden Ansprüche, **dadurch gekennzeichnet, dass** zwischen der Thermoplastfolie und der Klebeschicht eine Schicht aus einem Primer aufgebracht ist.

8. Verfahren nach zumindest einem der vorhergehenden Ansprüche, **dadurch gekennzeichnet, dass** die Thermoplastfolie eine Lackierung trägt, zum Beispiel eine Trennlackierung.

9. Verfahren nach zumindest einem der vorhergehenden Ansprüche, **dadurch gekennzeichnet, dass** die Haftung der Klebmasse auf der Thermoplastfolie durch Coronabehandlung oder vorzugsweise durch Flammenvorbehandlung verbessert wird.

10. Verwendung des Klebebandes nach einem der Ansprüche 1 bis 9 mit einem Träger auf Basis von biaxial gereckten Polyolefinen, Hart-PVC oder PET als Verpackungsklebeband mit gutem Kartonverschluss und mit gutem Anfassvermögen zu Papier, insbesondere recyceltem Papier, ausreichender Kohäsion, guter Verpackungssicherheit und leichtem Abrollen.

11. Verwendung des Klebebandes nach einem der Ansprüche 1 bis 10 mit einem Träger auf Basis von monoaxial gereckten Polyolefinen als Verpackungsklebeband, Strapping Tape, zum Bündeln und Palettieren von Kartonagen und anderen Gütern.

## Claims

1. Process for producing an adhesive tape comprising a backing comprising an oriented thermoplastic film and a coating comprising a pressure-sensitive adhesive composition based on non-thermoplastic elastomers such as natural rubber and tackifying resins and produced continuously without solvent and without mastication in a continuously operating device having a filling section and a compounding section, the pressure-sensitive adhesive composition comprising a thermally labile crosslinking system,
the said process comprising
a) feeding the solid components of the self-adhesive composition, such as elastomers and resins, into the filling section of the device, optionally feeding fillers, dyes and/or crosslinkers,
b) transferring the solid components of the self-adhesive composition from the filling section to the compounding section,
c) adding the liquid components of the self-adhesive composition, such as plasticizers, crosslinkers and/or further tackifying resins, to the compounding section,
d) preparing a homogeneous self-adhesive composition in the compounding section, and
e) discharging the self-adhesive composition.

2. Process according to Claim 1, **characterized in that** the thermoplastic film comprises biaxially oriented HOPE, PVC or PET, monoaxially oriented polypropylene or biaxially oriented polypropylene.

3. Process tape according to Claims 1 and 2, **characterized in that** the adhesive composition comprises a mixture comprising:
| | |
|---|---|
| a) 100 parts by weight of | natural rubber |
| b) 70-120 parts by weight of | tackifying resins based on hydrocarbons |
| c) 5-30 parts by weight of | fillers |
| d) 2-20 parts by weight of | plasticizers |
| e) 0.1-15 parts by weight of | a crosslinker system |
| f) 0.5-5 parts by weight of | ageing inhibitors. |

4. Process according to one of Claims 1 to 3, **characterized in that** the crosslinker system is based on isocyanates, such as diisocyanates or polyisocyanates, and is used in particular at 0.1-5.0 parts by weight, especially 0.1-2.0 parts by weight.

5. Process according to one of Claims 1 to 4, **characterized in that** the crosslinker system used comprises a mixture of at least one photoinitiator, used in particular at 0.1-5 parts by weight, and at least one polyfunctional (meth)acrylic ester, used in particular at 0.5-10 parts by weight.

6. Process according to at least one of the preceding claims, **characterized in that** the pressure-sensitive adhesive composition is crosslinked by means of accelerated electrons or UV radiation.

7. Process according to at least one of the preceding claims, **characterized in that** a coat of a primer is applied between the thermoplastic film and the adhesive layer.

8. Process according to at least one of the preceding claims, **characterized in that** the thermoplastic film comprises, a coating, for example a release coating.

9. Process according to at least one of the preceding claims, **characterized in that** the adhesion of the adhesive composition to the thermoplastic film is improved by means of corona treatment or, preferably, flame pretreatment.

10. Use of the adhesive tape according to one of Claims 1 to 9, with a backing based on biaxially oriented polyolefins, on plasticized PVC or PET, as an adhesive packaging tape with good carton sealing and with good tack with respect to paper, especially recycled paper, sufficient cohesion, good packaging security, and easy unrolling.

11. Use of the adhesive tape according to one of Claims 1 to 10, with a backing based on monoaxially oriented polyolefins, as an adhesive packaging tape, strapping tape, for bundling and palletizing cardboard packaging and other goods.

## Revendications

1. Procédé de fabrication d'un ruban adhésif doté d'un support en film thermoplastique étiré et d'un revêtement constitué d'une pâte adhésive à base d'élastomères non thermoplastiques, comme le caoutchouc naturel et des résines adhésives, préparées en continu, sans solvant et sans mastication, dans une machine travaillant en continu et dotée d'une partie de remplissage d'une partie de mélange, la pâte adhésive contenant un système de réticulation labile thermiquement, constitué des étapes qui consistent à:
a) amener des composants solides de la pâte autocollante, par exemple des élastomères et des résines, dans la partie de remplissage de la machine et éventuellement apporter des charges, des colorants et/ou des agents de réticulation,
b) transfert des composants solides de la pâte autocollante de la partie de remplissage jusque dans la partie de mélange,
c) addition de composants liquides de la pâte adhésive, par exemple plastifiants, agents de réticulation et/ou autres résines d'adhérence, dans la partie de mélange,
d) fabrication d'une pâte autocollante homogène dans la partie de mélange et
e) extraction de la pâte autocollante.

2. Procédé selon la revendication 1, **caractérisé en ce que** le film thermoplastique est constitué d'HDPE, de PVC ou de PET étiré biaxialement, de polypropylène étiré monoaxialement ou de polypropylène étiré biaxialement.

3. Procédé selon les revendications 1 et 2, **caractérisé en ce que** la pâte adhésive est constituée d'un mélange qui contient:
| | |
|---|---|
| a) 100 parties en poids | Caoutchouc naturel |
| b) 70-120 parties en poids | Résines adhésives à base d'hydrocarbures |
| c) 5-30 parties en poids | Charges |
| d) 2-20 parties en poids | Plastifiant |
| e) 0,1-15 parties en poids | Système de réticulation |
| f) 0,5-5 parties en poids | Agent de protection contre le vieillissement |

4. Procédé selon l'une des revendications 1 à 3, **caractérisé en ce que** le système de réticulation est basé sur des isocyanates tels que les diisocyanates ou les polyisocyanates, utilisés en particulier à raison de 0,1 à 5,0 parties en poids, et en particulier de 0,1 à 2,0 parties en poids.

5. Procédé selon les revendications 1 à 4, **caractérisé en ce que** comme système de réticulation, on utilise un mélange d'au moins un photoinitiateur, utilisé en particulier à raison de 0,1 à 5 parties en poids et au moins un (méth)acrylester polyfonctionnel, utilisé en particulier à raison de 0,5 à 10 parties en poids.

6. Procédé selon au moins l'une des revendications précédentes, **caractérisé en ce que** la pâte adhésive est réticulée par des électrons accélérés ou par une irradiation par UV.

7. Procédé selon au moins l'une des revendications précédentes, **caractérisé en ce qu'**une couche de primaire est appliquée entre le film thermoplastique et la couche adhésive.

8. Procédé selon au moins l'une des revendications précédentes, **caractérisé en ce que** le film thermoplastique porte un vernis, par exemple un vernis de séparation.

9. Procédé selon au moins l'une des revendications précédentes, **caractérisé en ce que** l'adhérence de la pâte adhésive sur le film thermoplastique est améliorée par un traitement Corona ou de préférence par un pré-traitement à la flamme.

10. Utilisation du ruban adhésif selon l'une des revendications 1 à 9, qui comporte un support à base de polyoléfines, de PVC dur ou de PET étirés biaxialement, comme ruban adhésif d'emballage permettant une bonne fermeture des cartons et avec un bon pouvoir d'accrochage sur le papier, en particulier sur le papier recyclé, une cohésion suffisante, une bonne protection de l'emballage et un déroulement aisé.

11. Utilisation de ruban adhésif selon l'une des revendications 1 à 10, qui comporte un support à base de polyoléfines étirées monoaxialement, comme ruban adhésif d'emballage, ruban de cerclage, pour botteler et palettiser des cartonnages et d'autres marchandises.
